# FASCICULE DE BREVET EUROPEEN

(11) **EP 0 709 594 B1**
(45) Date de publication et mention de la délivrance du brevet: **29.07.1998**
(21) Numéro de dépôt: 95402373.5
(22) Date de dépôt: 24.10.1995
(51) Int. Cl.: F16F 13/14

(54) **Perfectionnements aux supports antivibratoires hydrauliques**
Verbesserungen an vibrationsdämpfenden, hydraulischen Stützen
Improvements to antivibrational hydromounts

(30) Priorité: 27.10.1994 FR 9412889
(43) Date de publication de la demande: 01.05.1996
(73) Titulaire: HUTCHINSON, F-75008 Paris (FR)
(72) Inventeur: Bellamy, Alain, F-41100 Naveil (FR); Reh, Denis, F-28200 Chateaudun (FR); Petit, Pascal, F-28200 Chateaudun (FR)
(74) Mandataire: Burbaud, Eric

(56) Documents cités:
- EP-A- 0 012 638
- EP-A- 0 172 700
- EP-A- 0 236 199
- EP-A- 0 556 076
- EP-A- 0 646 735
- FR-A- 2 622 269
- GB-A- 2 200 190
- GB-A- 2 207 214
- PATENT ABSTRACTS OF JAPAN vol. 13 no. 538 (M-900) [3886] ,30 Novembre 1989 & JP-A-01 220737 (TOYO TIRE & RUBBER CO LTD) 4 Septembre 1989,
- PATENT ABSTRACTS OF JAPAN vol. 8 no. 140 (M-305) [1577] ,29 Juin 1984 & JP-A-59 037348 (TOUKAI GOMU KOGYO K.K.) 29 Février 1984,
- PATENT ABSTRACTS OF JAPAN vol. 13 no. 538 (M-900) [3886] ,30 Novembre 1989 & JP-A-01 220736 (MARUGO RUBBER KOGYO K.K.) 4 Septembre 1989,

## Description

L'invention concerne les supports antivibratoires hydrauliques destinés à être interposés, aux fins d'amortissement et de liaison, entre deux éléments rigides tels qu'un châssis et un moteur de véhicule, pour amortir des mouvements vibratoires entre ces deux éléments rigides, essentiellement selon une direction principale de vibration.

Plus particulièrement, l'invention a pour objet un support antivibratoire du genre en question, comportant :
- une première et une deuxième armatures rigides, solidarisables respectivement avec les deux éléments rigides à réunir, la deuxième armature étant une plaque de base qui s'étend dans un plan général sensiblement perpendiculaire à la direction principale de vibration,
- un corps en élastomère présentant une paroi épaisse qui relie entre elles les deux armatures rigides et qui présente une surface intérieure délimitant partiellement une chambre de travail, cette paroi épaisse présentant sensiblement une forme de cloche qui s'étend selon la direction principale de vibration entre d'une part une base périphérique solidaire de la deuxième armature et d'autre part un sommet solidaire de la première armature, le corps en élastomère comportant en outre une paroi mince en élastomère librement déformable qui est formée d'une seule pièce avec la paroi épaisse dudit corps en élastomère et qui délimite partiellement une chambre de compensation communiquant avec la chambre de travail par un canal étroit, les deux chambres et le canal étroit étant remplis d'un liquide, la plaque de base présentant une face dite de support qui est solidarisée de façon étanche avec le corps en élastomère pour délimiter avec celui-ci les deux chambres et le canal étroit,

- et des moyens de butée pour limiter le déplacement relatif des première et deuxième armatures l'une vers l'autre parallèlement à la direction principale de vibration dans le sens de l'écrasement de la chambre de travail, de façon à éviter un écrasement complet de la chambre de travail.

Le document EP-A-0 236 199 décrit un exemple d'un tel support antivibratoire hydraulique.

Dans ce document, les moyens de butée sont constitués par un bossage du corps en élastomère qui fait saillie vers l'intérieur de la chambre de travail parallèlement à la direction principale de vibration, ce bossage coopérant avec une partie de la deuxième armature pour limiter les débattements de la première armature en direction de la deuxième armature.

Les présents inventeurs ont découvert qu'un tel bossage est susceptible de perturber le bon fonctionnement du support antivibratoire à haute fréquence, notamment aux environs de 400 hertz, où la raideur dynamique du support devient trop importante.

L'invention a notamment pour but de pallier cet inconvénient.

A cet effet, selon l'invention, un support antivibratoire hydraulique du genre en question est essentiellement caractérisé en ce que les moyens de butée ne comportent aucune partie faisant saillie à l'intérieur de la chambre de travail à partir de la surface intérieure de la paroi épaisse du corps en élastomère, la première armature étant un organe allongé qui s'étend selon un axe perpendiculaire à la direction principale de vibration, la plaque de base comportant une zone non occupée par la chambre de travail ou la chambre de compensation, en regard d'une zone correspondante de la première armature, et les moyens de butée comportant un organe de butée qui est interposé entre ces deux zones de la plaque de base et de la première armature pour limiter les débattements de la première armature en direction de la plaque de base selon la direction principale de vibration, l'organe de butée étant un bloc d'élastomère qui appartient au corps en élastomère et qui est formé d'une seule pièce avec celui-ci, et le bloc d'élastomère étant solidaire de la plaque de base.

Dans des modes de réalisation préférés de l'invention, on a recours à l'une et/ou à l'autre des dispositions suivantes :
- la chambre de travail et la chambre de compensation sont juxtaposées de façon non concentrique sur la face de support de la plaque de base ;
- la paroi mince en élastomère présente une forme de cloche qui s'étend selon la direction principale de vibration entre une base périphérique solidaire de la plaque de base et un sommet libre, cette paroi mince étant reliée uniquement par une partie de sa base à la paroi épaisse du corps en élastomère.

Des avantages de l'invention apparaîtront au cours de la description détaillée suivante d'une de ses formes de réalisations, donnée à titre d'exemples non limitatifs, en regard des dessins joints.

Sur les dessins :
- la figure 1 est une vue en coupe d'une forme de réalisation de l'invention, la coupe étant prise selon la ligne I-I de la figure 2,
- la figure 2 est une vue en coupe selon la ligne II-II de la figure 1,
- et la figure 3 est une vue de dessous du dispositif des figures 1 et 2.

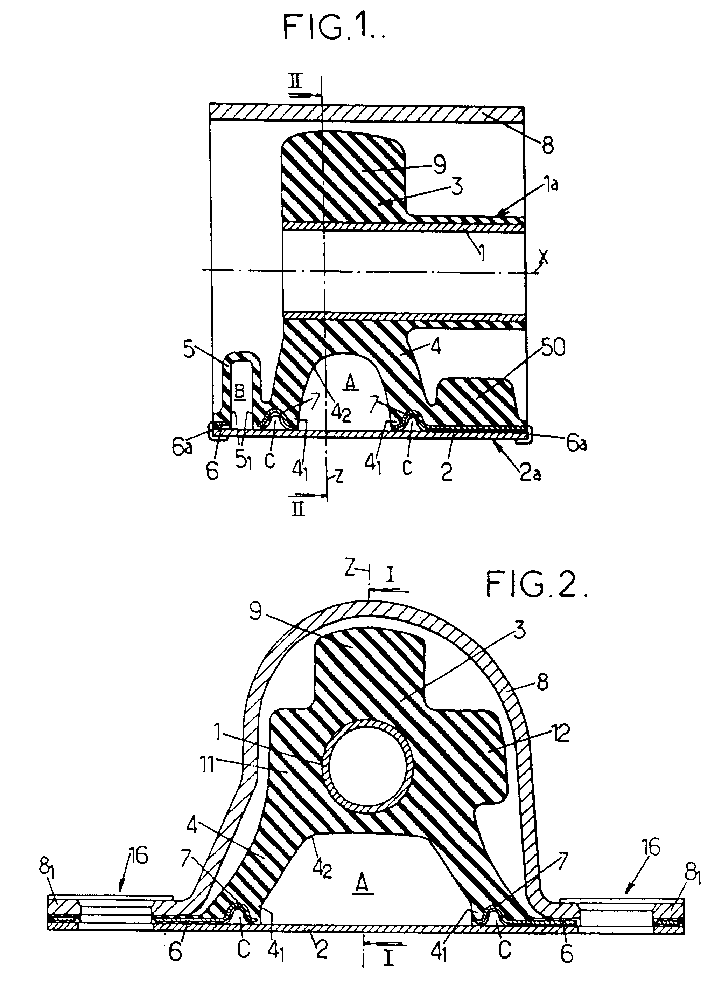

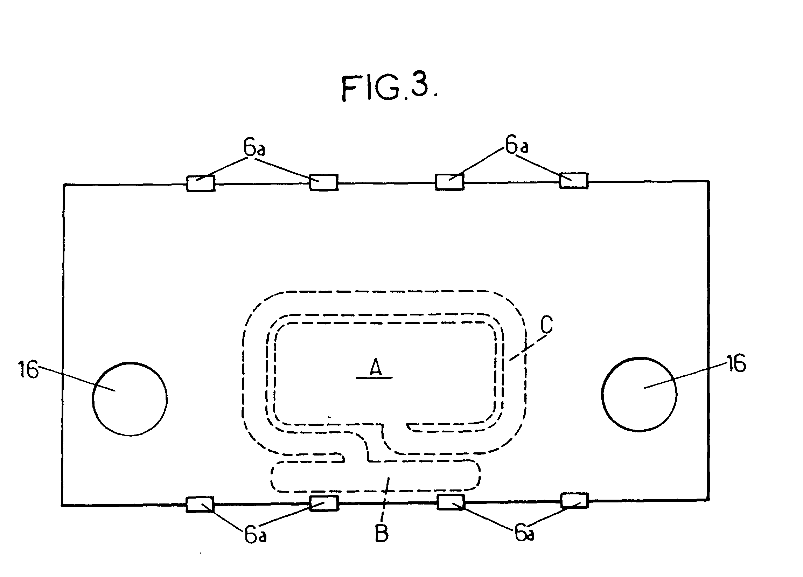

Dans la forme de réalisation de l'invention, représentée sur les figures 1 à 3, le support antivibratoire comporte deux armatures métalliques rigides 1 et 2 qui sont reliées entre elles par un corps en élastomère 3.

La première armature 1 est tubulaire dans l'exemple représenté, et présente un axe longitudinal X. De façon plus générale, la première armature 1 peut avoir la forme d'un organe allongé plein ou creux, de section circulaire ou non.

La deuxième armature 2, quant à elle, est une plaque appelée ci-après plaque de base, qui présente une forme générale plane au moins par morceaux, et qui s'étend parallèlement à l'axe X de la première armature.

Le corps en élastomère 3 est solidarisé avec la première armature 1 par vulcanisation. Il comporte une paroi épaisse 4 sensiblement en forme de cloche, qui s'étend depuis un sommet solidaire de la première armature 1 jusqu'à une base périphérique 4₁ solidaire de la plaque de base 2, selon une direction Z dans laquelle on souhaite amortir des mouvements vibratoires entre les deux armatures. La direction Z est perpendiculaire à l'axe X et au plan général de la plaque de base 2, et elle peut être par exemple verticale.

La paroi épaisse 4 présente une résistance à la compression suffisante pour supporter une charge statique appliquée à la première armature 1 parallèlement à l'axe Z et dirigée vers la plaque de base. Cette charge peut être par exemple supérieure à 15 kg, en général très supérieure.

La base périphérique 4₁ de la paroi épaisse 4 est solidarisée de façon étanche avec la plaque de base 2, en délimitant ainsi une chambre de travail A. Dans l'exemple représenté, la chambre A présente une section horizontale rectangulaire, mais elle pourrait avoir d'autres formes, notamment à section horizontale circulaire ou ovale.

Par ailleurs, le corps en élastomère 3 comporte en outre une paroi mince 5, souple, qui est juxtaposée à la paroi épaisse 4, et formée d'une seule pièce avec celle-ci.

La paroi mince 5 présente une forme de cloche, avec une base périphérique 5₁ qui est solidarisée de façon étanche avec la plaque de base 2, en délimitant ainsi une chambre de compensation B.

Cette chambre B présente une section horizontale rectangulaire dans l'exemple représenté, mais elle pourrait présenter une forme différente.

De préférence, les parois 4 et 5 ne présentent pas de partie commune entre les chambres A et B, en dehors de la liaison entre leurs bases 4₁ et 5₁.

Les deux chambres A et B communiquent par l'intermédiaire d'un canal étroit C, qui a la forme d'une gorge creusée dans la face du corps en élastomère 3 qui est appliquée contre la plaque de base 2, les bords de la gorge étant en contact étanche contre la plaque de base 2.

Les chambres A et B, ainsi que le canal étroit C, sont remplis de liquide. Lorsque les deux armatures 1 et 2 subissent des mouvements relatifs de vibration, la paroi épaisse 4 du corps en élastomère se déforme, ce qui provoque des variations de volume de la chambre de travail A. Ces variations de volume entraînent des transferts de liquide entre les chambres A et B, par l'intermédiaire du canal étroit C, les variations de volume de la chambre de travail A étant compensées par des variations complémentaires de la chambre de compensation B, dont la paroi mince 5 est facilement déformable.

Au voisinage d'une certaine fréquence, qui est généralement inférieure à 20 hertz et qui dépend essentiellement des dimensions du canal étroit C et de la masse volumique du liquide en mouvement dans ledit canal étroit, il se produit dans le canal étroit C un phénomène de résonance qui, en liaison avec les pertes de charge dans ledit canal étroit, provoque un fort amortissement des vibrations entre les deux armatures 1 et 2.

Par ailleurs, dans l'exemple représenté, le corps en élastomère 3 est surmoulé sur une plaque métallique ajourée 6, disposée sur la face du corps en élastomère qui est en contact avec la plaque de base 2. Ainsi, la plaque de base 2 peut être solidarisée avec le corps en élastomère par sertissage de pattes 6a de la plaque ajourée 6 sur la plaque de base 2, ou éventuellement par sertissage de ladite plaque de base 2 sur ladite plaque ajourée 6.

En outre, la plaque ajourée 6 comporte une gorge ou gouttière 7 qui détermine la forme du canal étroit C, avec une grande précision.

Le support antivibratoire des figures 1 à 3 comporte en outre un arceau 8 métallique qui est fixé de façon rigide à la plaque de base 2. L'arceau 8 entoure la première armature 1 et le corps en élastomère 3, et il s'étend parallèlement à l'axe X.

Dans l'exemple représenté, l'arceau 8 est une plaque pliée, qui recouvre la totalité du corps en élastomère, de façon à le protéger contre les chocs de corps extérieurs. Ceci est avantageux dans la mesure où la paroi mince 5 est fragile et exposée à côté de la paroi épaisse 4.

L'arceau 8 comporte deux prolongements latéraux 8₁, respectivement de chaque côté du corps en élastomère 3. Ces prolongements latéraux recouvrent chacun une partie de la plaque ajourée 6, qui elle-même recouvre la deuxième armature. De plus, ces trois éléments sont traversés par un perçage 16 au niveau de chaque prolongement 8₁.

Ces perçages 16 permettent de fixer le support antivibratoire sur une pièce rigide, au moyen de vis ou de boulons (non représentés), en complétant en outre la solidarisation des différentes parties du support antivibratoire par serrage des prolongements 8₁ sur la plaque 6 et la deuxième armature 2.

Pour coopérer avec l'arceau 8, le corps en élastomère 3 comporte un premier bossage 9, qui s'étend parallèlement à la direction Z à partir de la première armature 1, en direction opposée à la plaque de base 2. Ce bossage 9 est adapté à buter contre la partie supérieure de l'arceau 8, en limitant ainsi le déplacement de la première armature en éloignement par rapport à la plaque de base 2.

Le corps en élastomère comporte également des bossages latéraux 11, 12 sensiblement diamétralement opposés par rapport à la première armature 1, qui sont adaptés à buter contre l'arceau 8 lorsque la première armature est déplacée sensiblement perpendiculairement à l'axe X et à la direction Z.

Par ailleurs, la première armature 1 comporte une zone saillante 1a et la plaque de base 2 comporte une zone 2a sous ladite zone 1a de la première armature, la zone 2a n'étant occupée ni par la chambre de travail, ni par la chambre de compensation.

Dans cette zone 2a de la plaque de base est disposé un bloc 50 d'élastomère, qui est de préférence formé d'une seule pièce avec le corps en élastomère 3 et qui est également de préférence solidaire de la plaque de base 2, ce bloc 50 étant surmoulé sur la plaque ajourée 6.

Ce bloc d'élastomère 50 limite les débattements de la première armature 1 vers la plaque de base 2 parallèlement à la direction principale de vibration Z.

On évite ainsi la présence d'un bossage prévu dans la surface 4₂ du corps en élastomère qui délimite la chambre de travail A, lequel bossage 10 amoindrirait l'efficacité du support antivibratoire à haute fréquence, notamment aux environs de 400 hertz.

## Revendications

1. Support antivibratoire hydraulique, destiné à être interposé entre deux éléments rigides pour amortir des vibrations entre ces deux éléments, essentiellement selon une direction principale de vibration (Z), ce support comportant :
- une première (1) et une deuxième (2) armatures rigides, solidarisables respectivement avec les deux éléments rigides à réunir, la deuxième armature (2) étant une plaque de base qui s'étend dans un plan général sensiblement perpendiculaire à la direction principale de vibration (Z),
- un corps en élastomère (3) présentant une paroi épaisse (4) qui relie entre elles les deux armatures rigides (1, 2) et qui présente une surface intérieure (4₂) délimitant partiellement une chambre de travail (A), cette paroi épaisse (4) présentant sensiblement une forme de cloche qui s'étend selon la direction principale de vibration (Z) entre d'une part une base périphérique (4₁) solidaire de la deuxième armature (2) et d'autre part un sommet solidaire de la première armature (1), le corps en élastomère comportant en outre une paroi mince (5) en élastomère librement déformable qui est formée d'une seule pièce avec la paroi épaisse (4) dudit corps en élastomère et qui délimite partiellement une chambre de compensation (B) communiquant avec la chambre de travail (A) par un canal étroit (C), les deux chambres (A, B) et le canal étroit (C) étant remplis d'un liquide, la plaque de base présentant une face dite de support solidarisée de façon étanche avec le corps en élastomère pour délimiter avec celui-ci les deux chambres et le canal étroit,
- et des moyens de butée (50) pour limiter le déplacement relatif des première et deuxième armatures l'une vers l'autre parallèlement à la direction principale de vibration (Z) dans le sens de l'écrasement de la chambre de travail (A), de façon à éviter un écrasement complet de ladite chambre de travail,
**caractérisé en ce que** les moyens de butée (50) ne comportent aucune partie faisant saillie à l'intérieur de la chambre de travail à partir de la surface intérieure (4₂) de la paroi épaisse du corps en élastomère, la première armature (1) étant un organe allongé qui s'étend selon un axe (X) perpendiculaire à la direction principale de vibration (Z), la plaque de base (2) comportant une zone (2a) non occupée par la chambre de travail (A) ou la chambre de compensation (B), en regard d'une zone correspondante (1a) de la première armature (1), et les moyens de butée comportant un organe de butée (50) qui est interposé entre ces deux zones (1a, 2a) de la plaque de base et de la première armature pour limiter les débattements de la première armature (1) en direction de la plaque de base (2) selon la direction principale de vibration (Z), l'organe de butée (50) étant un bloc d'élastomère qui appartient au corps en élastomère (3) et qui est formé d'une seule pièce avec celui-ci, et ce bloc d'élastomère (50) étant solidaire de la plaque de base (2).

2. Support antivibratoire hydraulique selon la revendication 1, dans lequel la chambre de travail (A) et la chambre de compensation (B) sont juxtaposées de façon non concentrique sur la face de support de la plaque de base (2).

3. Support antivibratoire hydraulique selon la revendication 1 ou la revendication 2, dans lequel la paroi mince (5) en élastomère présente une forme de cloche qui s'étend selon la direction principale de vibration entre une base périphérique (5₁) solidaire de la plaque de base (2) et un sommet libre, cette paroi mince (5) étant reliée uniquement par une partie de sa base (5₁) à la paroi épaisse (4) du corps en élastomère.

## Patentansprüche

1. Vibrationsdämpfendes, hydraulisches Lager zum Zwischenschalten zwischen zwei starre Elemente, um Vibrationen zwischen diesen beiden Elementen im wesentlichen entlang einer Vibrations-Hauptrichtung (Z) zu absorbieren, wobei dieses Lager umfaßt:
- eine erste (1) und eine zweite (2) starre Armatur, die fest mit den beiden starren, zu vereinigenden Elementen verbindbar sind, wobei die zweite Armatur (2) eine Basisplatte umfaßt, die sich bezüglich einer Hauptebene im wesentlichen senkrecht zur Vibrations-Hauptrichtung (Z) erstreckt,
- einen Elastomerkörper (3), der eine dicke Wand (4) aufweist, die die zwei starren Armaturen (1, 2) miteinander verbindet und die eine innere Oberfläche (4₂) aufweist, die teilweise eine Arbeitskammer (A) begrenzt, wobei diese dicke Wand (4) im wesentlichen eine Glockenform aufweist, die sich entlang der Vibrations-Hauptrichtung (Z) zwischen einerseits einer peripheren Basis (4₁), die mit der zweiten Armatur (2) fest verbunden ist, und andererseits einer Spitze erstreckt, die mit der ersten Armatur (1) fest verbunden ist, wobei der Elastomerkörper außerdem eine dünne, frei deformierbare Wand (5) aus Elastomermaterial umfaßt, die einstückig mit der dicken Wand (4) dieses Elastomerkörpers ausgebildet ist und die teilweise eine Kompensationskammer (B) begrenzt, die mit der Arbeitskammern (A) über einen engen Kanal (C) in Verbindung steht, wobei die beiden Kammern (A, B) und der enge Kanal (C) mit einer Flüssigkeit befüllt sind, wobei die Basisplatte eine Lagerfläche aufweist, die abdichtend mit dem Elastomerkörper fest verbunden ist, um mit diesem die beiden Kammern und den engen Kanal zu begrenzen,
- und ein Anschlagmittel (50), um eine relative Verschiebung der ersten und zweiten Armatur zueinander hin parallel zur Vibrations-Hauptrichtung (Z) im Sinne eines Zusammendrückens der Arbeitskammer (A) derart zu begrenzen, daß ein vollständiges Zusammendrücken dieser Arbeitskammer vermeidbar ist,
**dadurch gekennzeichnet, daß** das Anschlagmittel (50) kein Teil aufweist, das in das Innere der Arbeitskammer von der inneren Oberfläche (4₂) der dicken Wand des Elastomerkörpers ragt, wobei die erste Armatur (1) ein verlängertes Bauteil aufweist, das sich entlang einer Achse (X) senkrecht zur Vibrations-Hauptrichtung (Z) erstreckt, wobei die Basisplatte (2) im Hinblick auf einen entsprechenden Bereich (1a) der ersten Armatur (1) einen Bereich (2a) aufweist, der von der Arbeitskammer (A) oder der Kompensationskammer (B) nicht eingeschlossen ist, und wobei das Anschlagmittel ein Anschlagbauteil (50) umfaßt, das zwischen diesen beiden Bereichen (1a, 2a) der Basisplatte und der ersten Armatur eingefügt ist, um den Durchfederungsweg der ersten Armatur (1) in Richtung der Basisplatte (2) entlang der Vibrations-Hauptrichtung (Z) zu begrenzen, wobei das Anschlagbauteil (50) einen Block aus Elastomermaterial aufweist, der zu dem Elastomerkörper (3) gehört und einstückig mit diesem ausgebildet ist, und wobei dieser Block (50) aus Elastomermaterial fest mit der Basisplatte (2) verbunden ist.

2. Vibrationsdämpfendes, hydraulisches Lager nach Anspruch 1, in dem die Arbeitskammer (A) und die Kompensationskammer (B) auf nichtkonzentrische Weise auf der Stützfläche der Basisplatte (2) nebeneinander angeordnet sind.

3. Vibrationsdämpfendes, hydraulisches Lager nach Anspruch 1 oder Anspruch 2, in dem die dünne Wand (5) aus Elastomermaterial eine Glockenform aufweist, die sich entlang der Vibrations-Hauptrichtung zwischen einer peripheren Basis (5₁), die mit der Basisplatte (2) fest verbunden ist, und einer freien Spitze erstreckt, wobei diese dünne Wand (5) nur durch einen Teil ihrer Basis (5₁) mit der dicken Wand (4) des Elastomerkörpers verbunden ist.

## Claims

1. A hydraulic antivibration support for interposing between two rigid elements to damp vibration between the two elements, essentially in a main vibration direction (Z), the support comprising:
. first and second rigid strength members (1, 2) suitable for being secured to respective ones of the two rigid elements to be united, the second strength member (2) being a base plate which extends in a general plane substantially perpendicular to the main vibration direction (Z);
. an elastomer body (3) having a thick wall (4) that connects the two rigid strength members (1, 2) together and that has an inside surface (4₂) defining part of a working chamber (A), said thick wall (4) being substantially bellshaped, extending along the main vibration direction (Z) from a peripheral base (4₁) secured to the second strength member (2) to a crown secured to the first strength member (1), the elastomer body also including a freely deformable thin elastomer wall (5) which is integrally formed with the thick wall (4) of said elastomer body and which defines part of a compensation chamber (B) in communication with the working chamber (A) via a narrow channel (C), the two chambers (A, B) and the narrow channel (C) being filled with a liquid, the base plate having a "support" face secured in sealed manner to the elastomer body to co-operate therewith in defining the two chambers and the narrow channel; and
. abutment means (50) for limiting relative movement of the first and second strength members towards each other parallel to the main vibration direction (Z) in the direction of the crushing of the working chamber (A), in order to avoid completely crushing said working chamber,
**characterized in that** the abutment means (50) do not include any portion that projects into the working chamber from the inside surface (4₂) of the thick wall of the elastomer body, the first strength member (1) being an elongate member extending along an axis (X) perpendicular to the main vibration direction (Z), the base plate (2) including a zone (2a) that is occupied neither by the working chamber (A) nor by the compensation chamber (B) and facing a corresponding zone (1a) of the first strength member (1), and the abutment means including an abutment member (50) which is interposed between said two zones (1a, 2a) of the base plate and of the first strength member in order to limit movements of the first strength member (1) towards the base plate (2) along the main vibration direction (Z), the abutment member (50) being an elastomer block which belongs to the elastomer body (3) and which is integrally formed therewith, and this elastomer block (50) being secured to the base plate (2).

2. A hydraulic antivibration support according claim 1, in which the working chamber (A) and the compensation chamber (B) are juxtaposed in non-concentric manner on the support face of the base plate (2).

3. A hydraulic antivibration support according to claim 1 or claim 2, in which the thin wall (5) of elastomer is bell-shaped, extending along the main vibration direction from a peripheral base (5₁) secured to the base plate (2) to a crown that is free, said thin wall (5) being connected via a portion only of its base (5₁) to the thick wall (4) of the elastomer body.
